# EUROPEAN PATENT APPLICATION

(11) **EP 1 655 725 A2**
(43) Date of publication of application: **10.05.2006**
(21) Application number: 05102169.9
(22) Date of filing: 18.03.2005
(51) Int. Cl.: G11B 7/09

(54) **Recording/reproducing information of an optical disk surface where no track information is present**

(30) Priority: 05.11.2004 JP 2004322734
(71) Applicant: Toshiba Samsung Storage Technology Corporation, Kawasaki City, Kanagawa 212-0013 (JP)
(72) Inventor: Otsuka, Hideki Toshiba Samsung Storage Tech. Corp., Kawasaki-City Kanagawa 212-0013 (JP); Kinoshita, Masakatsu Toshiba Digital Media E. C., Kawasaki-city Kanagawa 212-0013 (JP); Nakane, Hiroshi Toshiba Digital Media Eng. Corp., Kawasaki-City Kanagawa 212-0013 (JP); Otsuka, Makoto Toshiba Digital Media Eng. Corp., Kawasaki-City Kanagawa 212-0013 (JP); Tanaka, Takafumi Toshiba Digital Media Eng. Corp., Kawasaki-City Kanagawa 212-0013 (JP)
(74) Representative: Henkel, Feiler & Hänzel

(57) **Abstract**

An optical disk drive includes a pickup main body (65) that radiates a laser beam to a surface or a region of an optical disk (60), where no track information is present, thereby recording and/or reproducing predetermined information on the surface or the region, and that is movable in a radial direction of the optical disk (60), a position sensor (63) for detecting movement and/or a position of the pickup main body (65), and a control unit (81) that controls the position of the pickup main body (65) and/or an objective lens (72) on the basis of information relating to the movement and/or position of the pickup main body (65) that is detected by the position sensor (63).

## Description

The present invention relates generally to a technique of recording/reproducing information on an optical disk, and more particularly to an optical disk drive capable of recording/reproducing information on a surface or a region of an optical disk, where no track information is present, an information processing apparatus, and a control method for the optical disk drive.

Jpn. Pat. Appln. KOKAI Publication No. 2002-203321, for instance, discloses a prior-art technique of recording/reproducing information on a surface of an optical disk, where no track information is present, for example, on a label surface of an optical disk. According to this technique, when recording/reproduction is effected on the label surface of the optical disk, where no track information is present, a linear scale that uses a feed screw is employed in order to detect the position of a pickup lens (see, e.g. Jpn. Pat. Appln. KOKAI Publication No. 2002-203321).

In this technique, the linear scale using the feed screw is employed to detect the position of the pickup. Specifically, the position of the pickup is detected on the basis of the amount of driving of the feed motor. In this method, however, if an intended amount of movement of the pickup is not obtained relative to the amount of driving of the feed motor, for example, if the feed screw idly rotates, the exact position of the pickup cannot be detected.

The object of the present invention is to provide an optical disk drive capable of precisely detecting and controlling the position of a pickup when information is recorded/reproduced on a surface or a region of an optical disk, where no track information is present, an information processing apparatus, and a control method for the optical disk drive.

In order to achieve the object, the present invention provides an optical disk drive comprising: a pickup that radiates a laser beam to a surface or a region of an optical disk, where no track information is present, thereby recording and/or reproducing predetermined information on the surface or the region, and that is movable in a radial direction of the optical disk; sensor means for detecting movement and/or a position of the pickup, the sensor means being organically disposed on the pickup and/or a path of movement of the pickup; and control means for controlling the position of the pickup on the basis of information relating to the movement and/or position of the pickup that is detected by the sensor means. The invention also provides an optical disk drive that includes, as sensor means, a light emitting portion that moves following movement of the pickup; an encoder plate that varies and reflects or passes the light, which is emitted from the light emitting portion; and a light receiving portion that receives the light from the encoder plate. The invention also provides an optical disk drive wherein the control means controls first drive means for moving the pickup and/or second drive means for moving an objective lens of the pickup, on the basis of position difference information, which is obtained by comparing position information that is detected by the sensor means with target position information. The invention also provides an information processing apparatus including memory means for storing, as the predetermined information, image information that is to be recorded by the pickup on, for example, a label surface; and instruction means for supplying the image information from the memory means to the optical disk drive, and instructing the optical disk drive to record the image information on the optical disk (e.g. on the label surface). Therefore, the position of the pickup can precisely be detected and controlled even on a surface or a region of an optical disk, where no track information is present.

Using the present invention, the position of the pickup can precisely be detected and controlled when information is to be recorded/reproduced on a surface or a region of an optical disk, where no track information is present.

This summary of the invention does not necessarily describe all necessary features so that the invention may also be a sub-combination of these described features.

The invention can be more fully understood from the following detailed description when taken in conjunction with the accompanying drawings, in which:
FIG. 1 schematically shows a personal computer that is an information processing apparatus according to an embodiment of the present invention;
FIG. 2 is a perspective view that shows an optical disk drive of the personal computer according to the embodiment;
FIG. 3 is a perspective view that shows a state in which a drawer unit is ejected from the optical disk drive;
FIG. 4 is a plan view that shows the drawer unit of the optical disk drive according to the embodiment;
FIG. 5 is a perspective view that shows a mechanism unit of the optical disk drive according to the embodiment;
FIG. 6 is a perspective view that shows the mechanism unit in the state in which a cover of the mechanism unit is removed;
FIG. 7 is a perspective view that shows the back side of the mechanism unit of the optical disk drive according to the embodiment;
FIG. 8 is a cross-sectional view that shows a part of the mechanism unit of the optical disk drive according to the embodiment;
FIG. 9 is an enlarged cross-sectional view of a part α of the mechanism unit;
FIG. 10 is a schematic diagram showing an encoder plate that is provided in the optical disk drive according to the embodiment;
FIG. 11 is a schematic diagram showing the back surface of the encoder plate;
FIG. 12 is an enlarged plan view of a part β of the encoder plate;
FIG. 13 is a schematic plan view of a position sensor;
FIG. 14 is a schematic diagram that illustrates the relationship between the position sensor and the encoder plate;
FIG. 15 is a schematic diagram showing the structural elements of an optical pickup unit, position sensor and flexible cables that are connected to the optical unit and position sensor, respectively;
FIG. 16 is a schematic diagram showing the back side of the structural elements of the optical pickup unit, position sensor and flexible cables that are connected to the optical unit and position sensor, respectively;
FIG. 17 is a side view of a half-height type disk drive unit to which a transmissive encoder plate and a transmission-type position sensor are applied;
FIG. 18 is a schematic plan view that shows the back side of the half-height type disk drive unit;
FIG. 19 is a perspective view of the half-height type disk drive unit;
FIG. 20 is a perspective view of the back side of the half-height type disk drive unit;
FIG. 21 is a schematic diagram showing a region that includes a pickup unit of the optical disk drive according to the embodiment of the invention;
FIG. 22 is a schematic diagram that illustrates the control of a laser spot by a tracking/focus actuator;
FIG. 23 is a schematic diagram showing a region that includes a pickup unit of an optical disk drive according to another embodiment of the invention;
FIG. 24 is a schematic diagram showing a region that includes a pickup unit of an optical disk drive according to still another embodiment of the invention;
FIG. 25 shows the relationship between the position of the pickup and the output of a position difference signal;
FIG. 26 is a functional block diagram that illustrates the structure for calculating a position difference signal on the basis of position signals that are obtained by detecting the position of the pickup main body using the position sensor;
FIG. 27 is a diagram showing the relationship between the encoder plate and the position sensor;
FIG. 28 shows a truth table that is created on the basis of the comparative relationship in magnitude between two outputs from the position sensor and a reference voltage;
FIG. 29 shows a truth table that is created by adding a comparison result in magnitude of voltages Ach and Bch with a reference voltage;
FIG. 30 shows a truth table that is created on the basis of a result of a predetermined arithmetic operation;
FIG. 31 shows a truth table that is created on the basis of a result of a predetermined arithmetic operation;
FIG. 32 shows a truth table that is created on the basis of a result of a predetermined arithmetic operation;
FIG. 33 shows a truth table that is created on the basis of a result of a predetermined arithmetic operation;
FIG. 34 shows a circuit that modulates position difference information by PWM; and
FIG. 35 is a schematic diagram that shows an encoder plate, a position sensor and an output waveform at terminal D.

Embodiments of the present invention will now be described with reference to the accompanying drawings.

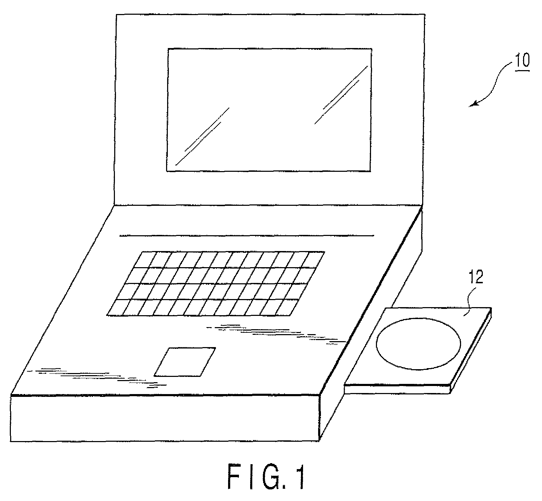

FIG. 1 is a schematic diagram that shows a notebook personal computer as an example of an information processing apparatus of the present invention. The computer 10 includes an optical disk drive 12 such as a DVD drive (a tray of the optical disk drive is ejected in FIG. 1). The computer 10 also includes a semiconductor memory and/or a hard disk drive as memory means for storing predetermined information that is to be recorded on an optical disk, and a CPU as instruction means for supplying information from the memory means and instructing recording of the information on the optical disk. In particular, the information processing apparatus according to the present invention is capable of processing a kind of image formation that is to be recorded on a surface or a region of the optical disk, where no track information is present (e.g. image information to be drawn on a label surface).

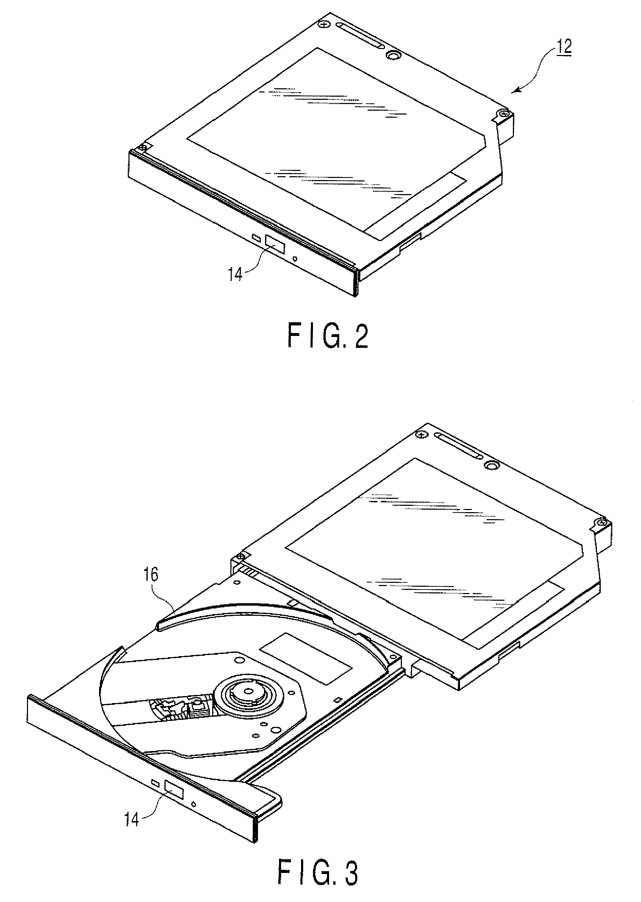

The optical disk drive 12, as shown in FIG. 2, includes an eject button 14. When the eject button 14 is pressed, a drawer unit 16 is ejected, as shown in FIG. 3.

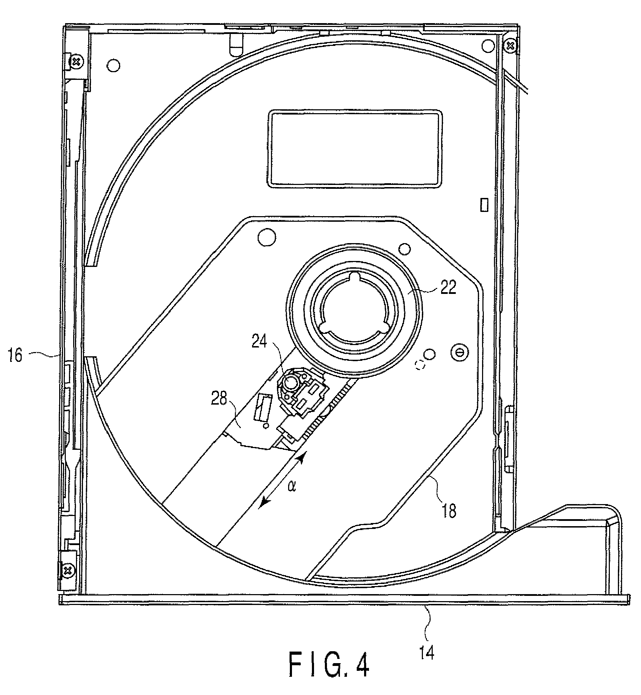

The drawer unit 16, as shown in FIG. 4, comprises a drive circuit board section of the disk drive, and a mechanism unit 18. A pickup unit (PUH) 28 of the mechanism unit 18 is driven so as to move along a direction α that is a radial direction of a disk driving motor (spindle motor) 22.

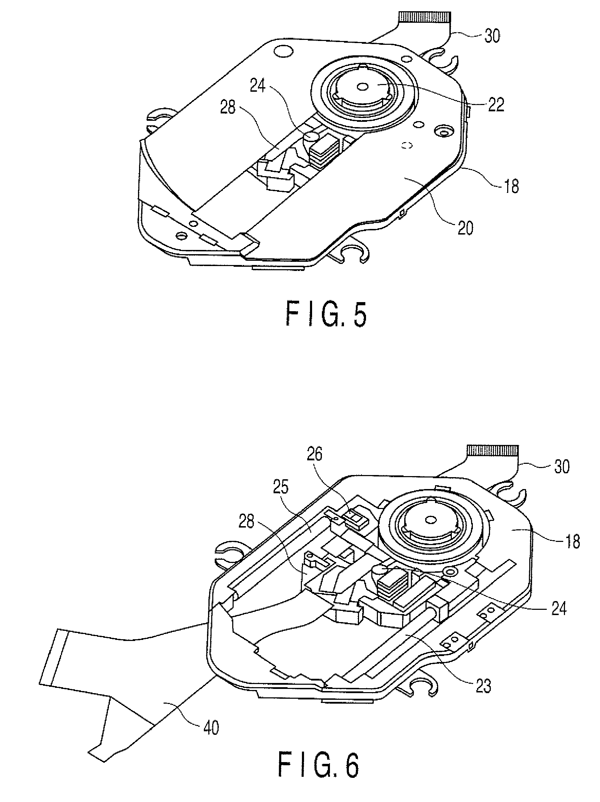

The mechanism unit 18, as shown in FIG. 5, holds the spindle motor 22, the pickup unit 28 and a mechanism for driving the spindle motor and the pickup unit 28. The mechanism unit 18 has a cover member 20 for covering these mechanism components. The pickup unit 28 includes an objective lens 24 for emitting a reading laser beam. The mechanism unit 18 is connected to a predetermined circuit board of the optical disk drive 12 via a flexible cable (FPC) 30.

FIG. 6 is a perspective view of the mechanism unit 18 in the state in which the cover member 20 is removed. The mechanism unit 18 includes a pickup drive mechanism that comprises a main shaft 23 and a sub-shaft 25. The main shaft 23 applies a driving force to the pickup unit 28 from a pickup feed motor via a lead screw and a rack gear that is meshed with the lead screw. The rack gear that transmits the driving force is attached to the main shaft 23. The sub-shaft 25 is disposed so as to be opposed to the main shaft 23. The sub-shaft 25 supports the pickup unit 28 and does not relate to the transmission of the driving force. The mechanism unit 18 further includes a position sensor 26 that has a light emitting portion and a light receiving portion, which are first provided in the present invention, and an encoder plate (that does not appear in FIG. 6) that reflects light from the position sensor 26 toward the light receiving portion. The position sensor 26 is provided on the sub-shaft 25 side. Thereby, the position sensor 26 and encoder plate can be arranged in a slim drive (the optical disk drive for the notebook personal computer), on which constraints in outside dimensions and mechanisms are imposed, without adversely affecting the shape of the pickup drive mechanism and arrangement of parts, or without increasing the outside dimensions of the optical disk drive.

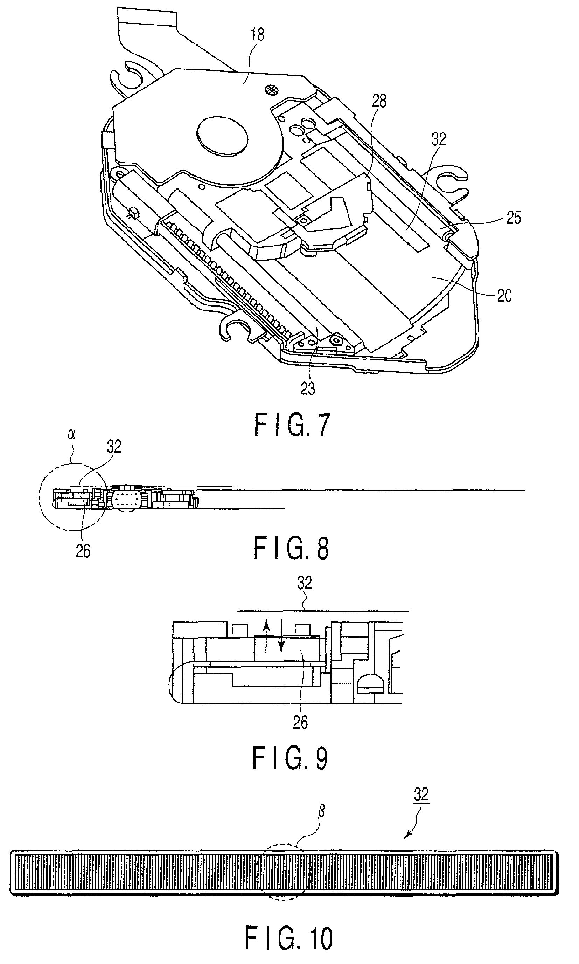

FIG. 7 is a perspective view that shows the back side of the mechanism unit 18.

The encoder plate 32 is attached to the back surface of the cover member 20 by means of an adhesive such as an adhesion bond, such that the encoder plate 32 extends along the path of movement of the pickup unit 28 and is opposed to the light emitting portion and light receiving portion of the position sensor 26. Alternatively, the encoder plate 32 may be directly drawn on the back surface of the cover member 20 by means of, e.g. etching. Since the encoder plate 28 is attached to the cover member 20 that is provided so as not to block a laser beam from the pickup unit 28, the emission light from the position sensor 26 does not interfere with the laser beam from the pickup unit 28, and the recording/reproducing operation is not adversely affected.

The encoder plate 32 is continuously formed from a position, which is more radially inward than a position where light from the position sensor 26 is reflected when the pickup unit 28 is moved to the radially innermost side, to a position, which is more radially outward than a position where light from the position sensor 26 is reflected when the pickup unit 28 is moved to the radially outermost side. Thereby, the position detection signal can continuously be output even while the pickup unit 28 is continuously being moved over the entire range of movement.

FIG. 8 is a cross-sectional view of the mechanism unit 18. FIG. 9 is an enlarged view of a distal end portion α in FIG. 8, where the position sensor 26 and encoder plate 32 are located. The position sensor 26 and encoder plate 32 are disposed to face each other. Light that is emitted from the light emitting portion of the position sensor 26 is reflected by the encoder plate 32 and brought back to the light receiving portion of the position sensor 26.

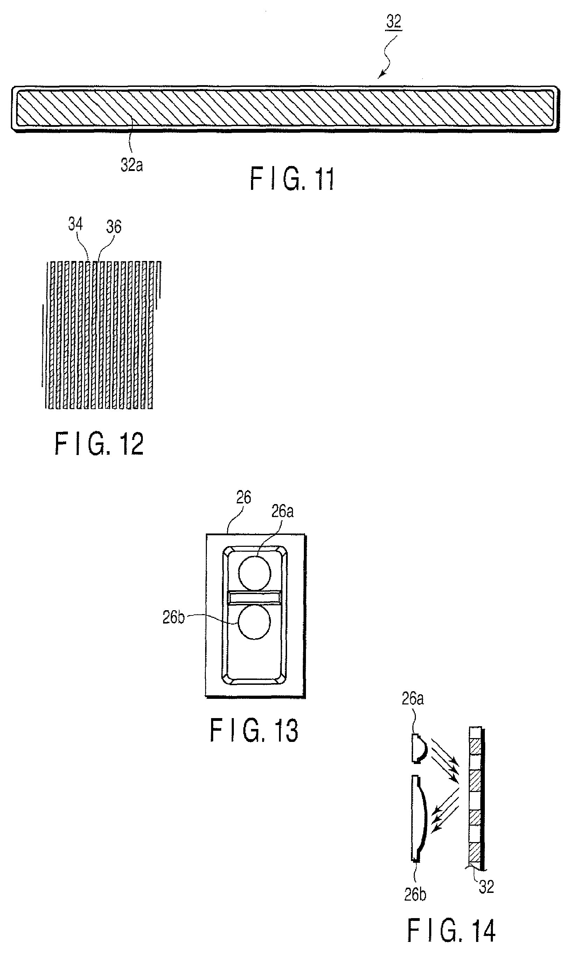

The encoder plate 32 has a bar-code shape, for example, as shown in FIG. 10. The encoder plate 32 reflects, passes, or absorbs light from the position sensor 26. FIG. 12 is an enlarged view of a portion β of the encoder plate 32 shown in FIG. 10. In FIG. 12, the encoder plate 32 comprises reflective portions 34 (striped portions with hatching) and non-reflective portions 36. The non-reflective portion 36 may pass or absorb light, as mentioned above. It should suffice if the state of light from the position sensor is varied by the reflective portion 34 and non-reflective portion 36 so as to have two or more values of variation.

FIG. 11 shows the back surface of the encoder plate 32. The encoder plate 32 is attached to the back surface of the cover member 20 by an adhesive 32a such as an adhesion bond. It is desirable that the adhesive 32a be provided on an area that is smaller than the area of the encoder plate 32 so that the adhesive 32a may not overflow when the cover member 20 is attached to the cover member 20. This prevents the adhesive from overflowing from the encoder plate 20 and contacting the flexible cable, thus adversely affecting the movement of the pickup unit 28.

The position sensor 26, as shown in FIG. 13, includes a light emitting portion 26a and a light receiving portion 26b. Light from the light emitting portion 26a of the position sensor 26 strikes on the encoder plate 32 and varies, as shown in FIG. 14. Part of the light is reflected by the encoder plate 32 and received by the light receiving portion 26b of the position sensor 26. The light receiving portion 26b of the position sensor 26 may be made larger than the light emitting portion 26a.

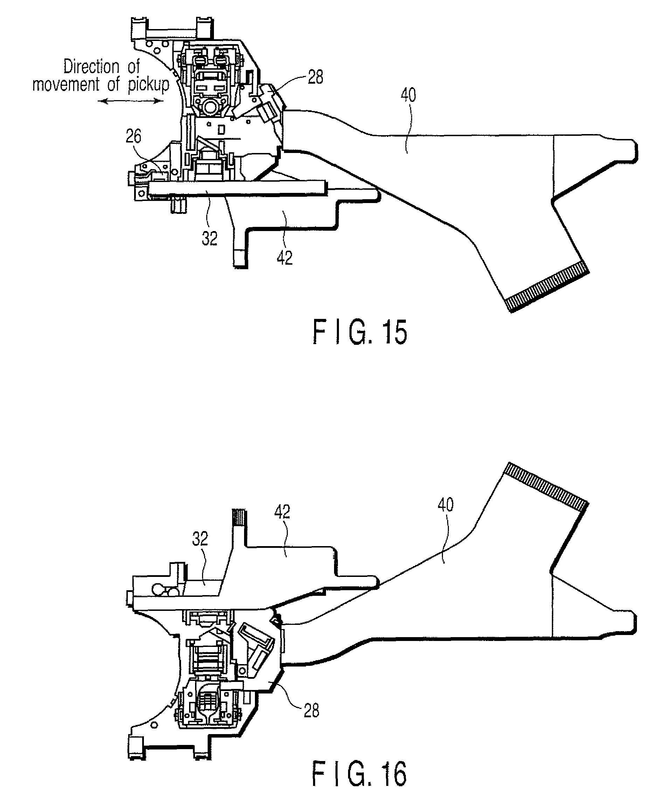

Flexible cables 40 and 42 are connected to the pickup unit 28 and position sensor 26. FIG. 15 is a schematic diagram showing this configuration. The pickup unit 28 is connected to the flexible cable 40, and the flexible cable 40 is connected to the drive circuit board of the disk drive. The position sensor 26 is connected to the flexible cable 42. The flexible cable 40 and flexible cable 42 are disposed so as not to overlap each other. In FIG. 15, the encoder plate 32 is depicted as if it were overlapped with the position sensor 26 and flexible cable 42. In fact, the encoder plate 32 is attached to the cover member 20 in this state. FIG. 16 is a schematic diagram that shows the back side of the structure shown in FIG. 15. In this manner, the flexible cable 40 and flexible cable 42 are disposed so as not to overlap each other.

The embodiment of the sensor means, which includes the reflective encoder plate, has been described. In the sensor means, light emitted from the position sensor 26 is varied by the encoder plate 32. A reflected component of the light is received by the position sensor 26, and the position of the pickup unit 28 is detected. Alternatively, a dedicated position sensor for light emission and a dedicated position sensor for light reception may be provided on both sides of a transmissive encoder plate. An embodiment that uses a transmissive encoder plate is described below.

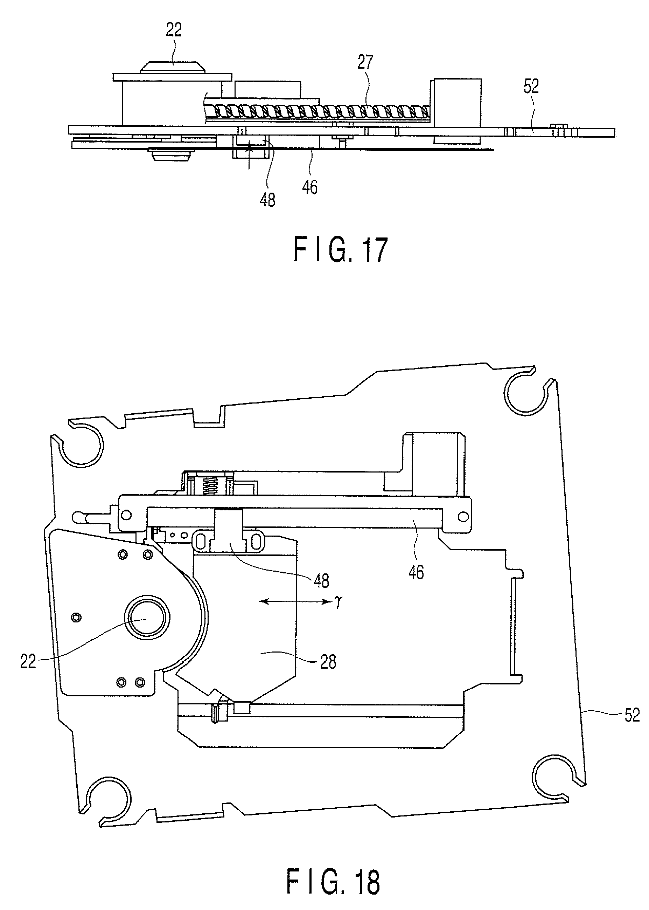

FIG. 17 is a schematic side view of a half-height type disk drive unit to which a transmissive encoder plate and a transmission-type position sensor are applied.

In this embodiment, unlike the above-described embodiment using the reflective encoder plate 32, a transmission-type position sensor 48 is disposed so as to sandwich a transmissive encoder plate 46, on the side where a driving force is applied to the pickup unit 28 provided in the half-height type disk drive unit 52, that is, on the side of the main shaft 23 that is the drive shaft, where the lead screw 27 is provided. The transmission-type position sensor 48 comprises two independent sensors, that is, a dedicated light emission portion and a dedicated light reception portion. For example, light is emitted from the light emitting portion in a direction indicated by the arrow. The light passes through the transmissive encoder plate 46 and is received by the light receiving portion. The transmissive encoder plate 46 comprises two regions, like the reflective encoder plate 32 shown in FIG. 12. That is, the transmissive encoder plate 46 comprises a transmissive region and a non-transmissive region. If light strikes the transmissive encoder plate 46, the light varies due to the transmissive region and non-transmissive region. The variation in light is detected by the light receiving portion. The non-transmissive region may absorb light, or may reflect light if reflected light does not interfere with light from the light emission portion. It is preferable, however, that the non-transmissive region absorb light. It is not necessary that each of the transmissive region and non-transmissive region be one kind. It should suffice if the state of light is varied by the transmissive region and non-transmissive region so as to have two or more values of variation. For example, two kinds of transmissive regions and two kinds of non-transmissive regions may be used so that the state of light is varied to have four values in total (the same applies to the reflective encoder plate).

FIG. 18 is a schematic plan view that shows the back side of the half-height type disk drive unit 52. The pickup unit 28 moves along with the transmission-type position sensor 48 in a direction γ of movement of the pickup, relative to the spindle motor 22. In FIG. 18, the light emission portion of the transmissive position sensor 48 is shown. The transmissive encoder plate 46 is located under the light emission portion, and the light receiving portion (not shown) of the transmissive position sensor 48 is located under the transmissive encoder plate 46.

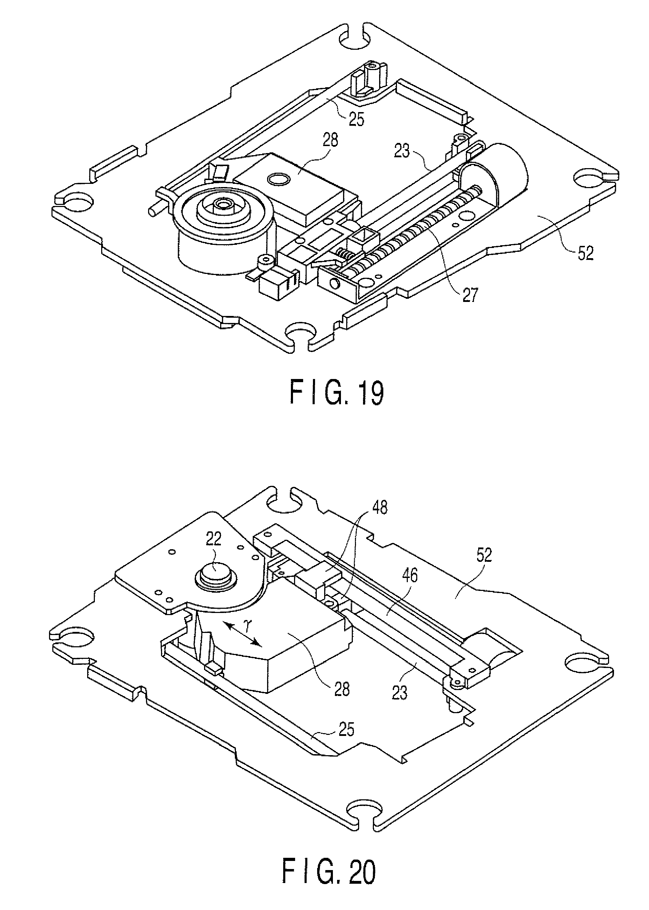

FIG. 19 is a perspective view of the half-height type disk drive unit 52. The pickup unit 28, main shaft 23, sub-shaft 25 and lead screw 27 are shown. However, the transmission-type position sensor 48 and transmissive encoder plate 46 are not shown since they are located on the back side of the main shaft 23.

FIG. 20 is a perspective view of the back side of the half-height type disk drive unit 52. The pickup unit 28 moves along with the transmission-type position sensor 48 in the direction γ of movement of the pickup, relative to the spindle motor 22. In FIG. 20, the light emission portion of the transmission-type position sensor 48 is shown. The transmissive encoder plate 46 is located under the light emission portion, and the light receiving portion of the transmissive position sensor 48 is located under the transmissive encoder plate 46.

As has been described above, in the present embodiment, the position sensor 26, 48 and the encoder plate 32, 46 are used as the sensor means for detecting the movement and/or position of the pickup. These components are organically arranged (specifically, the position sensor 26, 48 is formed integral with the pickup, and the encoder plate 32, 46 is provided along the path of movement of the pickup). Unlike the technique of detecting the movement of the pickup on the basis of the rotation of the feed motor, the movement and position of the pickup unit 28 can directly be detected. Therefore, the precision in detection is enhanced.

Next, the structure of the pickup unit 28 of the optical disk drive is described. In particular, a description is given here of the structure with which the optical disk drive executes recording/reproduction of information, such as drawing of image information, on an area of an optical disk, which is not a normal recording/reproduction area, that is, on a label surface with no track information or an area of an information surface that is located outside a data recording area.

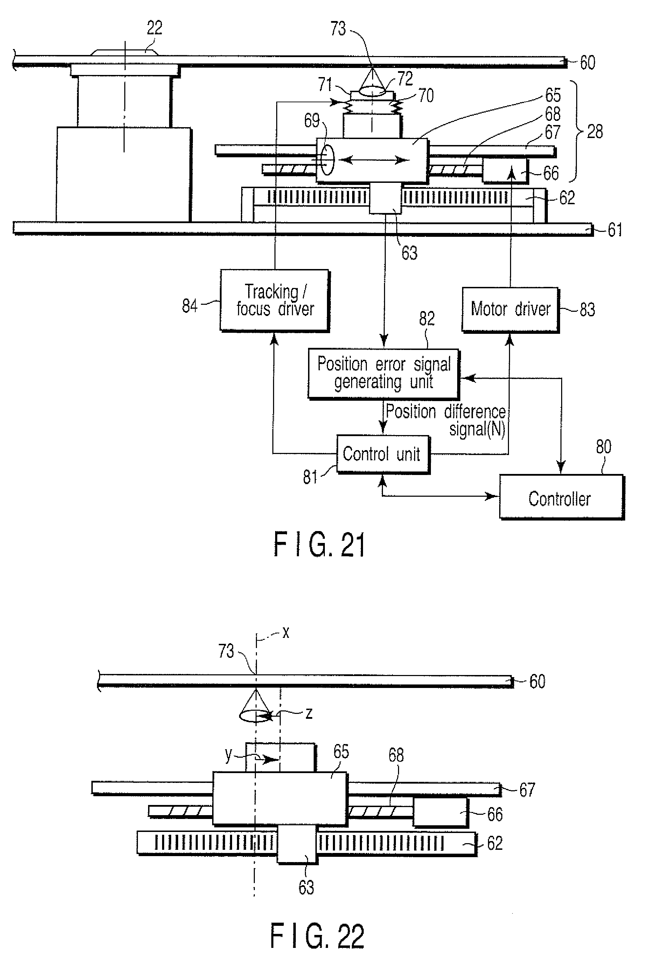

FIG. 21 is a schematic diagram showing a region that includes the pickup unit 28 of the optical disk drive according to the invention.

The spindle motor 22 is mounted on a chassis 61 of the optical disk drive. An optical disk 60 is secured to the spindle motor 22. Information write/reproduction on the optical disk 60 is executed by the pickup unit 28. A pickup main body 65 of the pickup unit 28, which is supported on a guide shaft 67, receives a driving force of the motor 66 via a lead screw 68 so that the pickup unit 28 can move in the right-and-left direction in FIG. 21. The pickup main body 65 accommodates a laser diode 69. A laser beam that is emitted from the laser diode 69 is radiated at a laser spot 73 on the optical disk 60 via an objective lens 72, thereby effecting information write/reproduction. Tracking and focusing of the objective lens 72 are executed by driving the objective lens 72 by means of a lens actuator 71. The lens actuator 71 comprises drive components 70 such as a wire suspension, a magnetic circuit and a drive coil. Unlike the feed motor 66, the actuator is free from rattling, and friction is small. Therefore, fine position control can be performed.

Light is made incident on the encoder plate 62 and a variation in light, such as reflection or transmission, is detected by the position sensor 63. Thereby, the position of the pickup main body 65 is determined. A position signal relating to the pickup main body 65, which is detected by the position sensor 63, is delivered to a position difference signal generating unit 82. The position difference signal generating unit 82 calculates a position difference signal that is indicative of a difference of position or position error relative to a target control position, on the basis of the received position signal and a target position signal (N) that is received from a controller 80 and is indicative of target position information of the pickup main body 65. The position difference signal that is calculated by the position difference signal generating unit 82 is delivered to a control unit 81. Based on the position difference signal, the control unit 81 drives, where necessary, the feed motor 66 via a motor driver 83 and controls the position of the pickup main body 65. Further, the control unit 81, drives, where necessary, the lens actuator 71 via a tracking/focus driver 84, and control the radial position of the objective lens 72. Thereby, the laser spot 73 is controlled and brought to a target point on the optical disk 60.

As mentioned above, either or both of the control of the laser spot 73 using the feed motor 66 and the control of the laser spot 73 using the lens actuator 71 are executed, depending on necessary. For example, when there is a distance, namely position difference y, between a target position x of the laser spot 73 and the center of the pickup main body 65 (approximately at the center of the radial movable range of the objective lens), as shown in FIG. 22, the laser spot 73 is moved by a movement amount z by the lens actuator 71 in such a direction as to cancel the position difference y. If the gain of the control unit 81 or the gain of the tracking/focus driver 84 is preset so that the position difference y and movement amount z may become equal, even where there is a position difference of the pickup main body, the lens actuator 71 moves so as to cancel the difference. Therefore, the laser spot 73 can exactly be positioned at the target position x. It is ideal that the position difference y and movement amount z is controlled so as to become equal, but no practical problem arises if a difference from a logical value is, e.g. within 30%.

In the embodiment shown in FIG. 22, only the lens actuator 71 is used to move the laser spot 73. If there is a greater position difference, the feed motor 66 is first driven to execute long-distance movement. Subsequently, the lens actuator 71 may be driven. Depending on necessity, only the feed motor 66 may be driven.

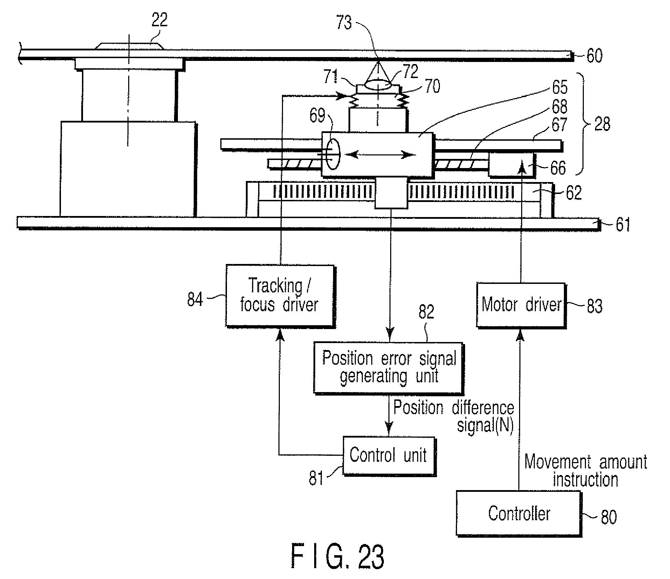

In the above-described embodiment, a feedback control is executed to control the pickup main body 65. Specifically, the controller 80 drives and controls the feed motor 66 and lens actuator 71 via the control unit 81. Alternatively, a structure as shown in FIG. 23 may be adopted.

The controller 80 directly controls the motor driver 83 without intervention of the control unit 81 and drives the feed motor 66. On the other hand, the lens actuator 71 is driven by the control unit 81 via the tracking/focus driver 84. The controller 80 sends, as a target value, a target position signal to the feed motor 66 via the motor driver 83, and does not execute a feedback control. In this case, if a stepping motor is adopted as the feed motor 66, the feed motor 66 is moved to the vicinity of the target position only if the controller 80 sends, as a target position signal, a number of pulses that corresponds to a target amount of movement. Thereafter, like the above-described embodiment, the control unit 81 calculates a position difference, relative to the target position, and drives and controls the lens actuator 71.

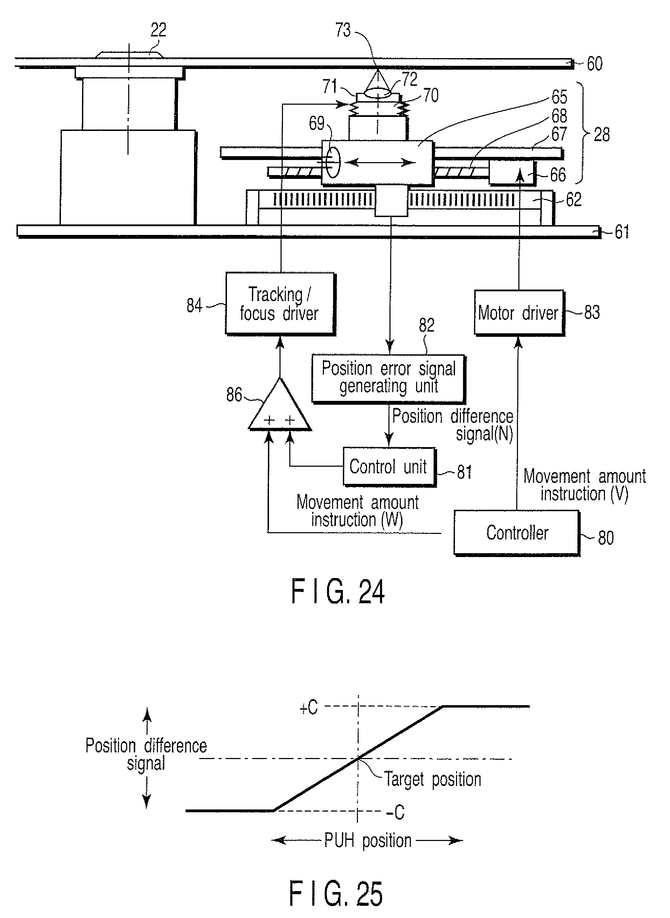

In an embodiment shown in FIG. 24, the controller 80 outputs a movement amount instruction signal (V) through the motor driver 83, thereby driving the feed motor 66. In addition, the controller 80 outputs a target movement amount instruction to the lens actuator 71 via an actuator driver 86 and the tracking/focus driver 84. The control unit 81 generates a position difference correction signal in accordance with a position difference from the target position of the pickup main body 65. The actuator driver 86 adds the position difference correction signal and the movement amount instruction signal (W) that is output from the controller 80, and delivers the added result to the tracking/focus driver 84.

In the case of adopting a stepping motor for the feed motor 66, the precision in position of the pickup main body 65 is maximized when a two-phase drive control is executed. In the case where the pickup main body 65 is controlled by two-phase driving, the lens actuator 71 is used if the laser spot 73 is to be moved by an amount that is smaller than the movement amount of the pickup main body 65. With use of both the feed motor 66 and lens actuator 71, the laser spot 73 can exactly be moved to the target position.

In the above-described embodiment, if the gain is adjusted so that the position difference of the pickup main body 65 may coincide completely with the movement amount of the objective lens 72 by the lens actuator 71, the laser spot 73, theoretically, remains at the target position. In fact, however, a delay occurs in the responsivity of the lens actuator 71 relative to the instruction voltage. In addition, if the position control of the pickup main body 65 is always functioning, vibration may occur due to the movement of the pickup main body 65. It is desirable, therefore, to stop and hold the position control of the pickup main body 65 when the position difference has decreased to a predetermined value or less.

If the position difference is large, there may be a case where an excessive current flows in the lens actuator 71. It is thus necessary to set an upper limit to the current that flows in the lens actuator 71. FIG. 25 shows the relationship between the position of the pickup main body 65 (PUH position) and the output of the position difference signal. In this example, an upper limit value is set to the position difference signal. Value "C" is set as the absolute value of the upper limit value of the position difference signal, and a control is executed to prohibit the position difference signal from exceeding ± C. In a possible control technique, a limiter may be provided within the control unit 81 to prevent output of a drive instruction voltage with a predetermined value or more. In another possible control technique, a limiter may be provided within the tracking/focus driver 84 to prevent the tracking/focus driver 84 from outputting a voltage or current with a predetermined value or more. With this control, an excessive current is prevented from flowing in the lens actuator 71.

Next, a description is given of a method of detecting the position of the pickup main body 65 by means of the position sensor 63 and calculating the position difference. In the method of calculating the position difference according to this embodiment, the precision is improved up to a 1/256 resolution with respect to a white-and-black pair on the encoder plate 62.

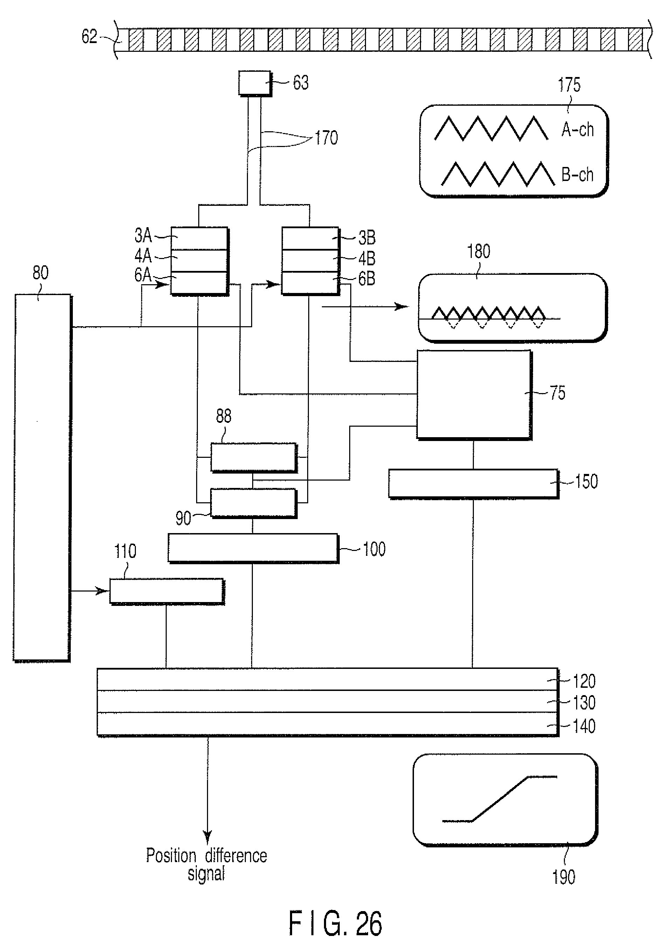

FIG. 26 is a functional block diagram that illustrates the structure for calculating a position difference signal on the basis of position signals that are obtained by detecting the position of the pickup main body 65 using the position sensor 63. The position sensor 63 detects the position of the pickup main body 65 as two signals (A-ch, B-ch) 170 with a phase difference of, e.g. about 90° . The detected two signals have waveforms 175. The detected two signals are input to A/D converters 3A and 3B and are converted to digital numerical-value signals. The output digital signals are input to gain adjusters 4A and 4B. The gain adjusters 4A and 4B multiply the digital numerical values by a predetermined coefficient through an arithmetic process. The A/D converters 3A and 3B and gain adjusters 4A and 4B may be reversely arranged. In this case, amplitudes may be increased by an analog process.

The output signals from the gain adjusters 4A and 4B are input to detectors 6A and 6B. In addition, a reference value is input from the controller 80 to the detectors 6A and 68. The reference value can be changed by a program. The detectors 6A and 6B compare the input signals from the gain adjusters 4A and 4B and the reference value, and output absolute values of the differences between the input signals and the reference value. The detected signal has a waveform 180. Results of comparison in magnitude with the reference value are delivered to a decoder 75.

Subsequently, a magnitude comparator 88 compares the magnitudes of signals from the detectors 6A and 6B. A comparison result is sent to the decoder 75 and a divider 90. The divider 90 receives outputs from the detectors 6A and 6B and executes a division arithmetic operation of "small value ÷ large value". Thus, the result of the arithmetic operation is always less than 1.

The decoder 75 divides a pair of white-and-black portions of the encoder plate 62 by 8, on the basis of the three input information (the signals from the detectors 6A and 6B and the comparison result data from the magnitude comparator 88). An output from the decoder 75 is delivered to a counter 150. When the sensor position shifts to a different pair of white-and-black portions, the count value is incremented or decremented. The decoder 75 outputs the result to a subtracter 120. The arithmetic division result from the divider 90 is linearly corrected by a lookup table 100 and the corrected value is output to the subtracter 120.

The controller 80 sends an instruction, which provides target position information, to a register 110 that stores target position information. Upon receiving the instruction, the register 110 outputs the target position information to the subtracter 120.

The subtracter 120 receives the output from the lookup table 100, which linearly corrects the division result of the divider 90, the count value from the counter 150, and the target position information from the register 110, and executes a subtraction process for calculating a difference between the current position and the target position. The subtraction result is output to a limiter 130. When the output from the subtracter 120 exceeds a predetermined value, the limiter 130 outputs a predetermined value in place of the output of the subtracter 120. The output from the limiter 130 is input to a converter 140, and converted to a PWM wave signal. The PWM wave signal is output as position difference information. This position difference information has a voltage vs. position difference characteristic with a waveform 190.

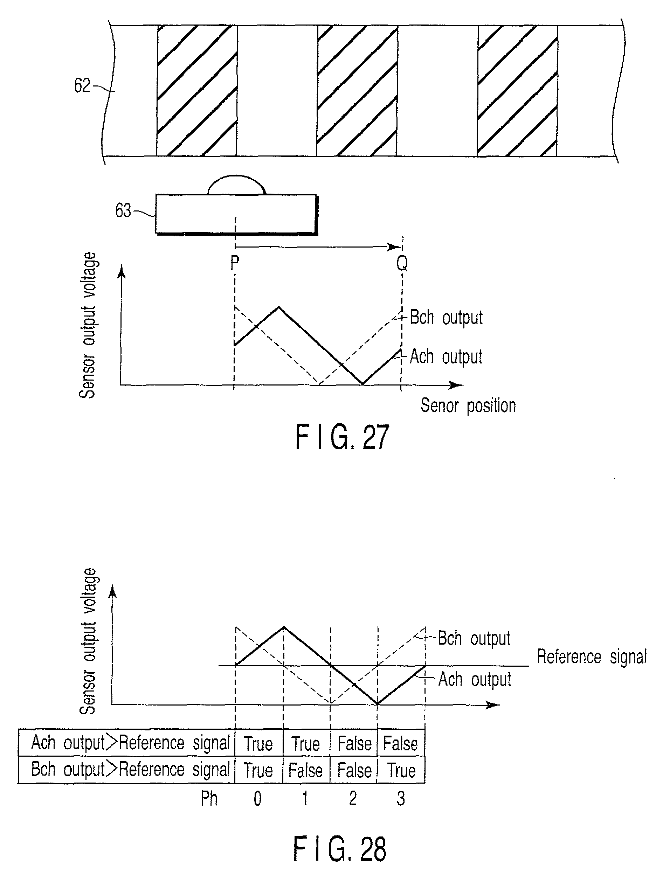

Next, the position detection by the position sensor 63 and encoder plate 62, which are used in the present embodiment, is described in greater detail. FIG. 27 is a diagram showing the relationship between the encoder plate 62 and the position sensor 63. Assume that the position sensor 63 is disposed relative to the encoder plate 62, as shown in FIG. 27. With movement of the position sensor 63 from a position P to a position Q, a detected sensor output voltage varies due to light from the position sensor 63 that is varied by the encoder plate 62. In this case, in order to obtain two outputs (A-ch, B-ch) with a phase difference of 90° , it is possible to use two position sensors 63. In FIG. 27, the obtained two outputs are expressed as two triangular waves. Alternatively, SIN (sine) wave outputs or COS (cosine) wave outputs may be obtained.

Next, a method of detecting the sensor position with higher precision on the basis of a single pair of white-and-black portions is described in detail. Normally, the sensor position is detectable only with a precision corresponding to the white-and-black parts of the encoder plate 62. However, if the two outputs obtained from the position sensor 63 are compared with a reference voltage and a truth table, as shown in FIG. 28, is created on the basis of the relationship in magnitude of the two outputs, the single white-and-black pair is divided into four parts on the truth table. Therefore, the position of the position sensor 63 can be detected with a precision of 1/4 of the single white-and-black pair.

For the purpose of description, symbols Ph0 to Ph3 are assigned to the respective phase states on the truth table. When the state Ph3 transits to the state Ph0, the count value in a pair of up/down counters is incremented. When the state Ph0 transits to the state Ph3, the count value is decremented. Thereby, it becomes possible to detect the number of white-and-black pairs, that is, a distance, over which the position sensor has moved in the (+) direction or in the (-) direction.

Next, a method of further enhancing the precision of detection of the sensor position is described.

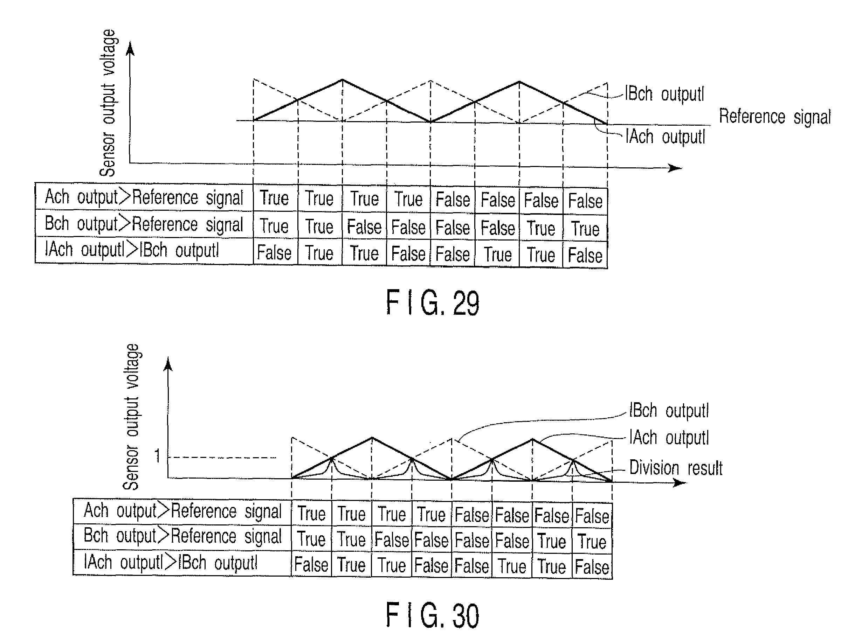

The voltages of the signal A-ch and signal B-ch are detected with respect to a reference voltage that is sent from the controller 80, and the comparative relationship in magnitude between the signal A-ch, B-ch and the reference voltage is detected. The comparison results are added to the truth table. Hence, as shown in FIG. 29, the position detection can be executed with a precision of 1/8 of the single white-and-black pair.

In this embodiment, the sensor position can be detected with still higher precision. That is, the sensor position can be detected with a precision of 1/256 of the single white-and-black pair.

The outputs from the position sensor 63 are digitized by the converters 3A and 3B each having 9-bit precision. The truth tables shown in FIG. 28 and FIG. 29 are created on the basis of the digitized values.

Referring to the truth table shown in FIG. 29, as regards the relationship between the two outputs |Ach output | and |Bch output| of the detectors 6A and 6B, a calculation, |Ach output | ÷ |Bch output|, is executed in the range in which |Ach output| > |Bch output| is false.

On the other hand, a calculation, |Bch output| ÷ |Ach output|, is executed in the range in which |Ach output| > |Bch output| is true.

This calculation is equivalent to Y = X ÷ (- X + 1), where 0 < = X < = 0.5, in the case of a triangular wave input. The calculation is equivalent to Y = COS X ÷ SIN X = TAN X, where COS X < = SIN X, in the case of SIN and COS wave inputs, and curves with values 0 and 1 are obtained. The precision is 8 bits. The calculation results are shown in FIG. 30.

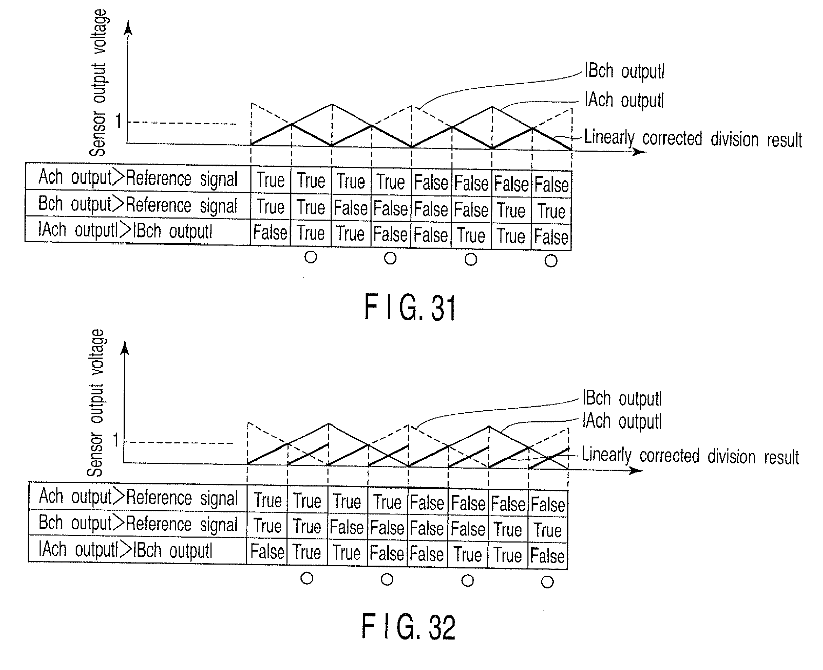

The division operation result of the divider 90 is linearly corrected by the lookup table 100. In an example shown in FIG. 31, the data after linear correction has a precision of 5 bits.

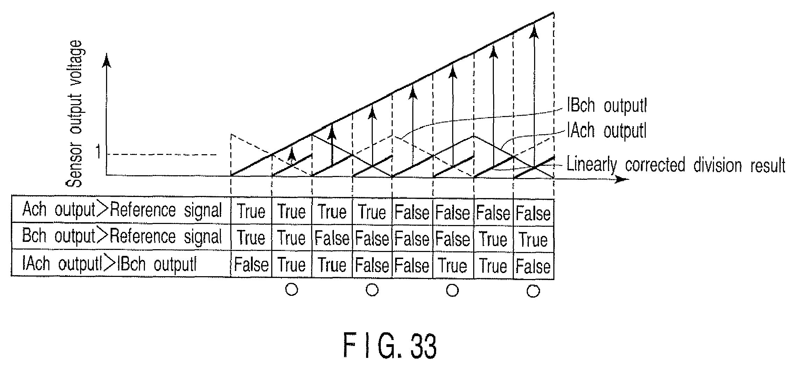

In ranges with mark ○ in the truth table of FIG. 31, that is, in ranges in which the division result so varies as to decrease, the division result is replaced with |1 - linearly corrected division result|, as shown in FIG. 32. Further, as shown in FIG. 33, the division values are offset in accordance with the true/false relationship in the truth table.

The division result has 5-bit precision and the truth tables of FIGS. 29 to 33 have 3-bit precision (precision of 1/8 of the single white-and-black pair). With 8-bit precision in total (precision of 1/56 of the single white-and-black pair), the position of the position sensor 63 can be detected.

If a "target position" is set for the above-described result of "current position detection", finer "position difference information" can be generated. In this embodiment, the difference between the current position and the target position is output by PWM.

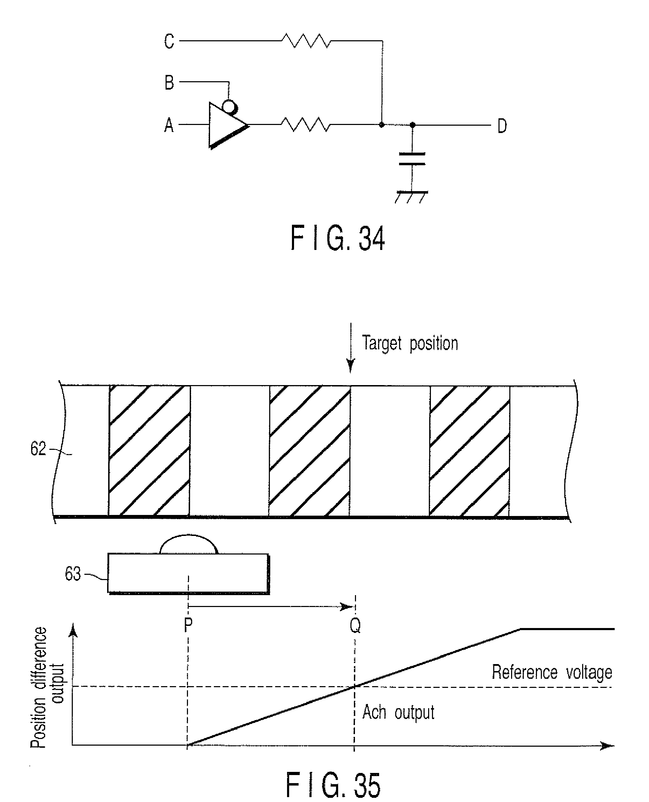

FIG. 34 is a circuit for PWM-modulating position difference information.

A terminal A is supplied with a signal that is indicative of a +/- sign of a position difference. A terminal B is supplied with an absolute value of the position difference.

Specifically, when the absolute value of the position difference is 0, a waveform with a time ratio of L:H = 0:256 is supplied.

When the absolute value of the position difference is 1, a waveform with a time ratio of L:H = 1:255 is supplied.

When the absolute value of the position difference is 2, a waveform with a time ratio of L:H = 2:254 is supplied.

When the absolute value of the position difference is 254, a waveform with a time ratio of L:H = 254:2 is supplied.

When the absolute value of the position difference is 255, a waveform with a time ratio of L:H = 255:1 is supplied.

A terminal C is supplied with a reference voltage.

A output waveform from a terminal D is as shown in FIG. 35. Based on this signal, the movement (or position) of the objective lens and/or the pickup main body is controlled so that the output of the position difference information may agree with the reference voltage that corresponds to the target position. Thereby, high-precision movement is realized.

As has been described above, according to the embodiment of the present invention, the position of the pickup can be precisely detected and controlled when information is recorded/reproduced on a surface or a region of an optical disk, where no tracks are present. In addition, the position control of the pickup can be executed on the basis of the output of the position sensor, no matter which of the position control of the pickup main body by means of the feed motor and the position control of the objective lens by means of the lens actuator is executed. Thus, high-precision position control can be realized.

In the embodiment shown in FIG. 6 and FIG. 7, the position sensor 26 and encoder plate 32 are disposed near the sub-shaft 25 of the pick-up unit 28. In the embodiment shown in FIG. 19 and FIG. 20, the position sensor 48 and encoder plate 46 are disposed near the main shaft 23 of the pickup unit 28. According to another embodiment of the invention, if there is no problem with the structure of the pickup unit 28 or the space, the position sensor and encoder plate may be disposed near the path of movement of the objective lens 24 of the pickup unit 28. In this case, since the encoder plate, which is associated with the position sensor, cannot be disposed on the optical disk side, the position sensor is provided on the side (back side) opposite to the side where the objective lens 24 of the pickup unit 28 is disposed. In this way, the position sensor moves substantially along the path of movement of the objective lens.

The following advantageous effects can thus be obtained. In the case of the preceding embodiment where the pickup unit 28 is driven using the main shaft 23 as the guide, a play (rattling) occurs between the main shaft 23 and a bearing metal of the pickup unit 28. The play increases as the pickup unit 28 is repeatedly moved. The effect of the play of the shaft appears on the sub-shaft 25 side where the degree of swing becomes large, with the main shaft functioning as the supporting point. On the other hand, the function of the position sensor is to detect the position where a laser beam is made incident on the optical disk through the objective lens. Thus, a detection error tends to easily occur as the distance between the position sensor and the objective lens increases. For example, in the case where the diameter of the main shaft is 2.992 mm (actual measurement value), the diameter of the bearing metal of the pickup unit is 3.010 mm, the length of the bearing metal is 19.4 mm and the distance between the center of the objective lens and the position sensor on the sub-shaft side is 20.17 mm, an error in output of the position sensor in relation to the position of the objective lens is (3.010 - 2.992)/19.4 . 20.17 = 18.7 µm. It is likely that an output error of 18.7 µm at maximum may occur. By disposing the position sensor near the objective lens and making the position sensor move substantially along the path of movement of the objective lens, the effect of play (rattling) of the shaft can be reduced.

The present invention is not limited to the above-described embodiments. At the stage of practicing the invention, various modifications and alterations may be made without departing from the spirit of the invention. For example, not only the optical sensor but also a magnetic sensor or any other type of sensor is usable as the sensor means. Structural elements disclosed in the embodiments may properly be combined, and various inventions can be made. For example, some structural elements may be omitted from the embodiments. Moreover, structural elements in different embodiments may properly be combined.

## Claims

1. An optical disk drive (12) **characterized by** comprising:
a pickup (28) that radiates a laser beam to a surface or a region of an optical disk (60), where no track information is present, thereby recording and/or reproducing predetermined information on the surface or the region, and that is movable in a radial direction of the optical disk (60);
sensor means (63) for detecting movement and/or a position of the pickup (28), the sensor means (63) being organically disposed on the pickup (28) and/or a path of movement of the pickup (28); and
control means (80) for controlling the position of the pickup (28) on the basis of information relating to the movement and/or position of the pickup (28) that is detected by the sensor means (63).

2. An optical disk drive (12) **characterized by** comprising:
a pickup (28) that radiates a laser beam to a label surface of an optical disk (60), thereby recording and/or reproducing predetermined information on the label surface, and that is movable in a radial direction of the optical disk (60);
an objective lens (72) that is provided on the pickup (28) such that the objective lens (72) is movable in a radial direction of the optical disk (60);
sensor means (63) for detecting relative movement and/or a position of the pickup (28) in relation to the optical disk (60); and
control means (80) for detecting a positional relationship between the pickup (28) and the optical disk (60) on the basis of an output from the sensor means (63), and controlling the position of the pickup (28),
wherein the sensor means (63) is disposed at such a position as to move substantially along a path of movement of the objective lens (72).

3. An optical disk drive (12) **characterized by** comprising:
a pickup (28) that radiates a laser beam to a label surface of an optical disk (60), thereby recording and/or reproducing predetermined information on the label surface, and that is movable in a radial direction of the optical disk (60);
a light emitting portion (26a) that is provided such that the light emitting portion (26a) moves following movement of the pickup (28) and emits light in a direction perpendicular to the direction of movement of the light emitting portion (26a);
an encoder plate (32) that varies and reflects the light, which is emitted from the light emitting portion (26a), in accordance with the movement and/or position of the pickup (28);
a light receiving portion (26b) that receives the reflective light from the encoder plate (32); and
control means (80) for executing a control to move the pickup to a given position on the label surface of the optical disk (60) on the basis of information relating to the reflective light that is received by the light receiving portion (26b).

4. An optical disk drive (12) **characterized by** comprising:
a pickup (28) that radiates a laser beam to a label surface of an optical disk (60), thereby recording and/or reproducing predetermined information on the label surface, and that is movable in a radial direction of the optical disk (60);
a light emitting portion (26a) that is provided such that the light emitting portion (26a) moves following movement of the pickup (28) and emits light in a direction perpendicular to the direction of movement of the light emitting portion (26a);
an encoder plate (32) that varies and transmits the light, which is emitted from the light emitting portion (26a), in accordance with the movement and/or position of the pickup (28);
a light receiving portion (26b) that is disposed to be opposed to the light emitting portion (26a) with the encoder plate (32) interposed, and receives the transmissive light that passes through the encoder plate (32); and
control means (80) for executing a control to move the pickup to a given position on the label surface of the optical disk (60) on the basis of information relating to the transmissive light that is received by the light receiving portion (26b).

5. The optical disk drive (12) according to claim 3, **characterized in that** the encoder plate (32) is disposed in the same horizontal direction as the label surface, and the encoder plate (32) is provided on the inside of a cover (20), which is provided so as not to block a laser beam from the pickup (28), and is provided to face the light emitting portion (26a) and the light receiving portion (26b).

6. The optical disk drive (12) according to claim 1, **characterized in that** the encoder plate (32) moves along with the pickup (28) and is disposed near a sub-shaft (25) that supports the pickup (28) on a side opposite to a main shaft (23) that supports the pickup (28) on a side where a driving force is transmitted to the pickup (28).

7. The optical disk drive (12) according to claim 3 or 4, **characterized in that** the encoder plate (32) is configured to impart optical variations with at least two values to the light that is emitted from the light emitting portion (26a), and the encoder plate (32) is continuously formed from a position, which is more radially inward than a central position of the light emitting portion (26a) or the light receiving portion (26b) when the pickup (28) is positioned on a radially innermost side, to a position, which is more radially outward than the central position of the light emitting portion (26a) or the light receiving portion (26b) when the pickup (28) is positioned on a radially outermost side.

8. The optical disk drive (12) according to claim 3 or 4, **characterized in that** the light emitting portion (26a), the light receiving portion (26b) and the pickup (28) are connected to an integrally formed flexible cable that transmits signals associated with the light emitting portion (26a), the light receiving portion (26b) and the pickup (28).

9. The optical disk drive (12) according to claim 3 or 4, **characterized in that** the light emitting portion (26a) and the light receiving portion (26b), and the pickup (28) are connected to flexible cables, respectively, and the flexible cables are configured to be out of contact with the encoder plate (32) when the pickup (28) is moved.

10. The optical disk drive (12) according to claim 5, **characterized in that** when the encoder plate (32) is attached to the cover by means of an adhesive, the adhesive is provided on an area that is smaller than an area of the encoder plate (32).

11. An optical disk drive (12) **characterized by** comprising:
a pickup (28) that is moved by first drive means (66);
setting means (80) for setting, as target position information, a target position to which the pickup (28) is to be moved, relative to a surface or a region of an optical disk (60) where no track information is present;
an objective lens (72) that is provided on the pickup (28) and is moved by second drive means (70);
sensor means (63) for detecting position information of the pickup (28);
position difference information detection means (82) for detecting position difference information of the pickup (28) by comparing the position information detected by the sensor means (63) with the target position information; and
control means (80) for driving the second drive means (70) on the basis of the position difference information, thereby controlling the objective lens (72).

12. The optical disk drive (12) according to claim 11, **characterized in that** the control means (80) drives the first drive means (66) on the basis of the position difference information, thereby controlling the pickup (28).

13. The optical disk drive (12) according to claim 11, **characterized by** further comprising a controller, aside from the control means (80), the controller driving the first drive means (66), thereby controlling the pickup (28).

14. An optical disk drive (12) **characterized by** comprising:
a pickup (28) that is moved by first drive means (66);
setting means (80) for setting, as target position information, a target position to which the pickup (28) is to be moved, relative to a surface or a region of an optical disk (60) where no track information is present;
an objective lens (72) that is provided on the pickup (28) and is moved by second drive means (70);
sensor means (63) for detecting position information of the pickup (28);
position difference information detection means (82) for detecting position difference information of the pickup (28) by comparing the position information detected by the sensor means (63) with the target position information; and
control means (80) for driving the first drive means (66) on the basis of the position difference information, thereby controlling the pickup (28).

15. An optical disk drive (12) **characterized by** comprising:
a pickup (28) that records or reproduces predetermined information on an optical disk (60) and that is movable in a radial direction of the optical disk (60);
sensor means (63) for detecting movement and/or a position of the pickup (28), regardless of an information track on the optical disk (60); and
position information generating means (82) for generating position information of the pickup (28) on the basis of an output from the sensor means (63),
wherein the position information generating means (82) includes:
detection means for detecting a first signal from the sensor means (63) and a second signal from the sensor means (63), the second signal having a phase difference of about 90° from the first signal;
means for comparing the first signal with a reference signal and outputting a comparison result as a third signal;
means for comparing the second signal with the reference signal and outputting a comparison result as a fourth signal;
means for comparing an absolute value of the first signal and an absolute value of the second signal and outputting a comparison result as a fifth signal;
means for executing a division operation of the first signal and the second signal, and outputting a division result as a sixth signal; and
means for generating position information on the basis of a combination of the third signal, the fourth signal, the fifth signal and the sixth signal.

16. The optical disk drive (12) according to claim 15, **characterized in that** the sixth signal has a resolution of x bits based on the division result.

17. An information processing apparatus **characterized by** comprising:
the optical disk drive (12) according to any one of claims 1 to 16;
memory means for storing image information that is to be recorded by the pickup (28) on a surface or a region of the optical disk (60) where no information track is present; and
instruction means for supplying the image information, which is stored in the memory means, to the optical disk drive (12), and instructing the optical disk drive (12) to record the image information on the optical disk (60).

18. A control method for an optical disk drive (12), **characterized by** comprising:
a step of radiating a laser beam from a pickup (28), which is movable in a radial direction of an optical disk (60), to a surface or a region of the optical disk (60) where no track information is present, thereby recording and/or reproducing predetermined information on the surface or the region with no track information;
a detection step of detecting movement and/or a position of the pickup (28) by sensor means (63), the sensor means (63) being organically disposed on the pickup (28) and/or a path of movement of the pickup (28); and
a control step of controlling the position of the pickup on the basis of information relating to the movement and/or position of the pickup (28) that is detected by the sensor means (63).

19. A control method for an optical disk drive (12), **characterized by** comprising:
a step of radiating a laser beam from a pickup (28), which is movable in a radial direction of an optical disk (60), to a label surface of the optical disk (60), thereby recording and/or reproducing predetermined information on the label surface;
a light emission step of emitting light from a light emitting portion (26a) that is provided such that the light emitting portion (26a) moves following movement of the pickup (28) and emits light in a direction perpendicular to the direction of movement of the light emitting portion (26a);
a reflection step of varying and reflecting the light, which is emitted from the light emitting portion (26a), by an encoder plate (32) in accordance with the movement and/or position of the pickup (28);
a light receiving step of receiving the reflective light from the encoder plate (32) by a light receiving portion (26b); and
a control step of executing a control to move the pickup to a given position on the label surface of the optical disk (60) on the basis of information relating to the reflective light that is received by the light receiving portion (26b).

20. A control method for an optical disk drive (12), **characterized by** comprising:
a step of setting, as target position information, a target position to which a pickup (28) is to be moved, relative to a surface or a region of an optical disk (60) where no track information is present;
a step of detecting position difference information of the pickup (28) by comparing position information of the pickup, which is detected regardless of track information by sensor means (63) that is organically disposed on the pickup (28) and/or a path of movement of the pickup, with the target position information; and
a step of driving the first drive means (66) for moving the pickup (28) and/or driving the second drive means (70) for moving an objective lens (72), which is provided on the pickup, on the basis of the position difference information, thereby controlling the pickup (28).
